# FASCICULE DE BREVET EUROPEEN

(11) **EP 1 581 731 B1**
(45) Date de publication et mention de la délivrance du brevet: **13.09.2006**
(21) Numéro de dépôt: 03815396.1
(22) Date de dépôt: 12.12.2003
(51) Int. Cl.: F01N 11/00, F01N 3/08, F02D 41/02

(54) **PROCEDE DE COMMANDE D'UN MOTEUR A COMBUSTION INTERNE POUR LA REGENERATION DE MOYENS DE PURIFICATION DES GAZ D'ECHAPPEMENT ET DISPOSITIF ASSOCIE**
VERFAHREN ZUR STEUERUNG EINES VERBRENNUNGSMOTORS ZUR REGENERATION VON ABGASREINIGUNGSMITTELN SOWIE ENTSPRECHENDE VORRICHTUNG
METHOD FOR CONTROLLING AN INTERNAL COMBUSTION ENGINE FOR REGENERATING EXHAUST GAS PURIFYING MEANS AND CORRESPONDING DEVICE

(30) Priorité: 18.12.2002 FR 0216127
(43) Date de publication de la demande: 05.10.2005
(73) Titulaire: Renault, 92100 Boulogne Billancourt (FR)
(72) Inventeur: DANEAU, Marc, F-92100 Boulogne Billancourt (FR); DIONNET, Bernard, F-91150 Morigny-Champigny (FR); COCHET, Stéphane, F-78000 Versailles (FR); AUCOUTURIER, Philippe, F-95120 Ermont (FR); MOLLET, Jean-Claude, F-92380 Garches (FR)
(74) Mandataire: Dossmann, Gérard
(86) Numéro de dépôt international: PCT/FR2003/003693
(87) Numéro de publication internationale: WO 2004/065766

(56) Documents cités:
- EP-A- 0 636 770
- US-A- 5 313 791

## Description

La présente invention concerne un procédé de commande d'un moteur à combustion interne, notamment pour la régénération de moyens de purification associés an moteur, et un, dispositif de commande associé.

Des efforts sont entrepris pour diminuer les émissions polluantes des véhicules automobiles munis de moteur à combustion interne, notamment les émissions de monoxyde de carbone (CO), d'oxydes d'azote (NOx) et d'hydrocarbures imbrûlés (HC).

Pour ce faire, on dispose de façon connue en soi des éléments de purification des gaz d'échappement tels que des convertisseurs catalytiques, du type piège à oxydes d'azote, aptes à favoriser des oxydations ou des réductions de ces émissions polluantes pour leur transformation en émissions considérées comme non-polluantes.

Dans les convertisseurs catalytiques, les oxydes d'azote sont retenus dans des sites actifs d'éléments catalytiques favorisant leur réaction avec des réducteurs présents dans les gaz d'échappement. Des phases de purge des éléments catalytiques sont prévues dans lesquelles on agit sur la composition des gaz d'échappement pour favoriser l'élimination des oxydes d'azote piégés dans des sites catalytiques des éléments catalytiques.

Pendant une phase de purge, on peut déterminer à partir de mesures la composition des gaz d'échappement à l'aide d'une sonde à oxygène proportionnelle située sur une ligne de gaz d'échappement, en amont des moyens de purification, pour connaître la composition des gaz d'échappement qui entrent dans les moyens de purification et ainsi mieux contrôler l'élimination des oxydes d'azote piégés. La sonde à oxygène proportionnelle permet plus particulièrement de connaître une richesse carburant/air des gaz d'échappement.

Le document EP 0 636 770 (Toyota) décrit un dispositif de purification de gaz d'échappement comprenant un absorbeur d'oxydes d'azote, une sonde disposée en aval de l'absorbeur, et des moyens de décision pour déterminer la fin d'une phase de purge en fonction du signal de la sonde.

Ce document ne divulgue pas de procédé ou dispositif permettant d'agir sur la composition des gaz d'échappement issus du moteur.

A partir du signal fourni par la sonde, on pourra par exemple agir, par l'intermédiaire d'une boucle de rétroaction sur des injecteurs pour modifier un mélange de combustion, et la composition des gaz d'échappement issus du moteur.

On peut souhaiter disposer d'un procédé de commande d'un moteur à combustion interne avec une fiabilité améliorée et un coût de mise en oeuvre réduit.

La présente invention concerne un procédé de commande d'un moteur à combustion interne pouvant être mise en oeuvre à partir d'un moteur de conception simple, avec un nombre d'élément limité, ce qui permet de réduire un coût de fabrication du moteur, et permet d'améliorer la fiabilité du moteur.

La présente invention concerne également un procédé de commande d'un moteur permettant l'utilisation d'éléments plus robustes et mieux adaptés à l'environnement du moteur.

Dans un tel procédé de commande d'un moteur à combustion interne pour la régénération de moyens de purification des gaz d'échappement disposés, sur une ligne d'échappement du moteur, pendant une phase de régénération des moyens de purification, on analyse une composition des gaz d'échappement uniquement en aval des moyens de purification à l'aide d'une sonde à oxygène, et, on élabore à partir de ladite analyse un signal de commande du moteur pour modifier une composition des gaz d'échappement on amont des moyens de purification de façon à maintenir un signal de sortie de la sonde à oxygène à une valeur de référence.

L'analyse des gaz d'échappement en aval des moyens de purification permet de mieux détecter la fin d'une phase de purge, par exemple d'un piège à oxydes d'azotes, par un changement de la composition des gaz d'échappement en aval des moyens de purification. La commande du moteur basée sur une analyse en aval des moyens de purification permet d'éviter l'emploi, de moyens d'analyse supplémentaires en amont des moyens de purification, qui seraient en outre plus exposés à la température et la pression importante des gaz d'échappement directement en sortie du moteur.

Dans un mode de mise en oeuvre, on modifie la composition des gaz d'échappement en modifiant une composition d'un mélange de combustion.

Dans un mode de mise en oeuvre, on analyse la composition des gaz d'échappement à l'aide d'une sonde à oxygène du type tout ou rien ou du type proportionnelle située en aval des moyens de purification. On a remarqué que le signal fourni par une sonde à oxygène du type tout ou rien, c'est-à-dire du type sonde « lambda », ou proportionnelle, disposée en aval des moyens de purification est sensiblement proportionnel à la richesse carburant/air des gaz d'échappement en amont des moyens de purification pendant une phase de purge, et pouvait avantageusement être utilisé pour la régulation de la composition des gaz d'échappement.

Le signal fourni par une sonde lambda dépend d'une température de fonctionnement de la sonde lambda. Avantageusement, on peut prévoir de contrôler une température de fonctionnement de la sonde.

Pour élaborer un signal de commande du moteur, on peut comparer un signal de sortie de la sonde à une valeur de référence, et élaborer un signal de commande pour diminuer un écart entre le signal de sortie de la sonde et la valeur de référence. Le signal de commande est un signal de commande permettant d'agir de façon contrôlée sur la composition des gaz d'échappement.

Dans un mode de mise en oeuvre, on détecte une étape de fin d'une phase de régénération à partir d'un signal de commande pour la modification de la composition des gaz d'échappement. On a remarqué que l'on pouvait détecter une étape de fin de purge à partir d'un signal fourni par une sonde lambda disposée en aval des moyens de purification. Dans le cas d'une régulation de la composition des gaz d'échappement situés en aval à partir du signal de sortie d'une sonde en aval des moyens de purification, ledit signal de sortie est régulé et peut plus difficilement être utilisé pour détecter la fin d'une étape de purge. Néanmoins, le signal de commande élaboré à partir du signal de mesure peut être utilisé pour détecter la fin d'une phase de purge.

L'invention concerne également un dispositif de commande pour la régénération de moyens de purification des gaz d'échappement disposés sur une ligne d'échappement d'un moteur à combustion interne, comprenant un module de commande apte à modifier une injection de carburant, et une sonde à oxygène disposée sur la ligne d'échappement directement en aval des moyens do purifications. Le module de commande est apte, pendant une phase de régénération des moyens de purification, à provoquer une modification de la composition des gaz d'échappement uniquement en fonction d'un signal de sortie de ladite sonde à oxygène de façon à maintenir un signal de sortie de la sonde à oxygène à une valeur de référence.

Avantageusement, la sonde à oxygène est du type tout-on-rien on « lambda », ou proportionnelle.

Le dispositif peut en outre comprendre des moyens de contrôle de la température de fonctionnement de la sonde.

De préférence, le dispositif comprend un module de détection apte à détecter la fin d'une phase de régénération en fonction d'un signal de commande produit par le module de commande.

La présente invention et ses avantages seront mieux compris à l'étude de la description détaillée d'un mode de mise en oeuvre pris à titre d'exemple nullement limitatif, illustrée par les dessins annexés sur lesquels :
- la figure 1 est une vue d'ensemble schématique d'un ensemble d'entraînement pour véhicule automobile muni de moyens de purification de gaz d'échappement :

- la figure 2 est un graphique illustrant un signal de sortie d'une sonde à oxygène du type lambda située en aval des moyens de purification, selon un aspect de l'invention :

- la figure 3 est un graphique illustrant un signal de commande élaboré à partir du signal de sortie selon la figure 2 ; et
- la figure 4 est un schéma blocs représentant un module de commande selon un aspect de l'invention.

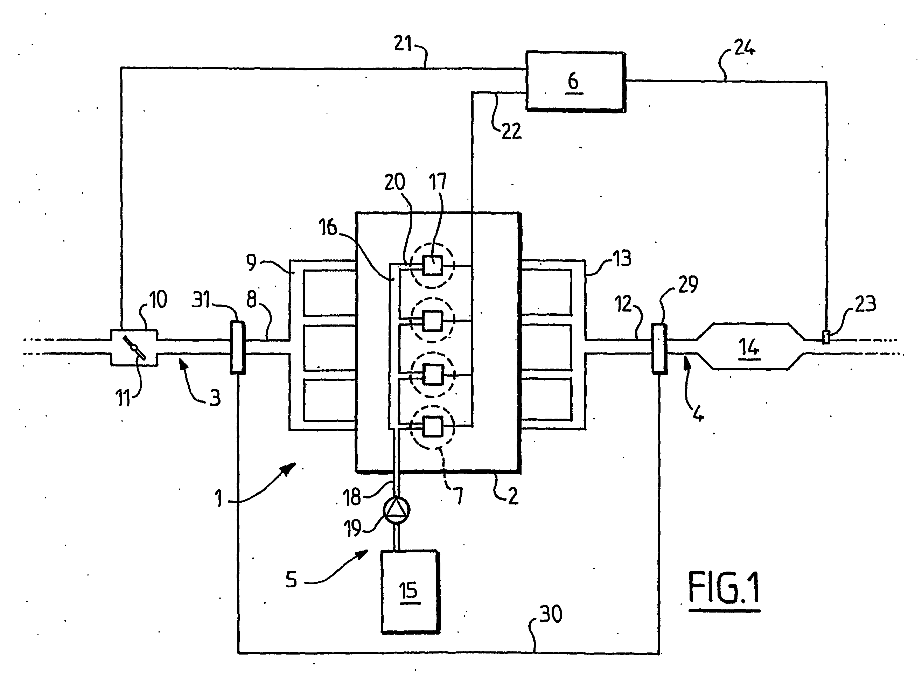

Sur la figure 1, un ensemble d'entraînement référencé 1 dans son ensemble comprend un moteur à combustion interne 2, une ligne d'admission d'air 3, une ligne d'échappement 4, un dispositif d'alimentation en carburant 5, et une unité de commande 6.

Le moteur à combustion interne 2 comprend des chambres de combustion ou cylindres 7, ici au nombre de quatre, et représentés par ces cercles en pointillés.

La ligne d'alimentation 3 comprend une conduite intermédiaire d'alimentation 8 débouchant d'un côté dans un collecteur d'admission 9 à une entrée et quatre sorties pour distribuer un flux d'air admis dans les chambres de combustion 7, et muni du côté opposé d'un élément de commande de débit d'air admis 10 sous la forme d'un papillon d'admission 11 disposé entre la conduite intermédiaire d'alimentation 8 et une prise d'air, non représentée sur le dessin.

La ligne d'échappement 4 comprend une conduite intermédiaire d'échappement 12, dont une entrée est reliée à un collecteur d'échappement 13 à quatre entrées et une sortie, pour récupérer et canaliser un flux de gaz d'échappement issu des cylindres 7 du moteur 2, une sortie de la conduite intermédiaire d'échappement 12 étant reliée à un moyen de purification des gaz d'échappement sous la forme d'un convertisseur catalytique 14, qui peut être à titre d'exemple du type piège à oxydes d'azote, et qui est disposé en amont d'une sortie terminale de la ligne d'échappement 4, non représentée sur la figure.

Le dispositif d'alimentation en carburant 5 comprend un réservoir de carburant 15, une rampe commune 16 et des injecteurs 17, ici au nombre de quatre, prévus pour l'injection de carburant directement dans les cylindres 7 du moteur 2. La rampe commune 16 est reliée au réservoir 15 par l'intermédiaire d'une conduite d'alimentation 18, et d'un système d'alimentation 19 reliant la conduite d'alimentation 18 au réservoir 15. Le système d'alimentation peut comprendre à titre d'exemple nullement limitatif une pompe d'alimentation haute pression, elle-même alimentée à partir d'u réservoir par une pompe basse pression ou pompe de « gavage ». Les injecteurs 17 sont reliés à la rampe commune 16 par l'intermédiaire de conduites d'injection 20. Le système d'alimentation 19 est commandé pour remplir la rampe commune 16 en carburant et maintenir une pression de consigne dans la rampe commune 16 servant de réservoir de pression pour l'alimentation de chacun des injecteurs 17.

L'unité de commande 6 est prévue pour élaborer des signaux de commande du papillon 11, et des injecteurs 17. L'unité de commande 6 peut également être prévue pour la commande d'autres éléments d'exécution de fonctions élémentaires du moteur non représentés (vanne de re-circulation des gaz d'échappement...)

L'unité de commande 6 est reliée par des liaisons de commande, respectivement 21, 22, à un actionneur non représenté et commandant la position du papillon 11, et aux injecteurs 17.

L'ensemble d'entraînement 1 comprend un dispositif de turbo pour accélérer de l'air admis. Le dispositif de turbo comprend une turbine 29 disposée sur la conduite intermédiaire d'échappement 12 en aval du collecteur d'échappement 13, la turbine 29 entraînant par l'intermédiaire d'un axe de turbo 30, représenté de façon schématique par un trait, un compresseur 31 disposé sur la conduite intermédiaire d'admission 8, en amont du collecteur d'admission 9.

L'unité de commande 6 utilise pour l'élaboration des signaux de commande, des signaux de mesure provenant d'une sonde à oxygène 23 du type lambda ou proportionnelle située sur la ligne d'échappement 4 directement en aval du convertisseur catalytique 14. L'unité de commande 6 est reliée à la sonde 23 par l'intermédiaire d'une liaison de mesure 24.

En fonctionnement, l'unité de commande 6 élabore à partir de tout signal nécessaire ou utile pour la commande du moteur à combustion interne, tel que le signal de position d'une pédale d'accélérateur, la vitesse de rotation du moteur ou la charge appliquée au moteur, ou une température du liquide de refroidissement,..., des signaux de commande du papillon 11 et des injecteurs 17, ainsi que d'autres éléments d'exécution de fonctions élémentaires associés au moteur. Pendant une phase de purge du convertisseur catalytique 14, l'unité de commande 6 adapte une commande des injecteurs 17 pour tenir compte d'un signal de mesure provenant de la sonde lambda 23, comme cela sera mieux décrit par la suite.

Bien entendu, l'invention n'est pas limitée au cas où l'on agit sur les injecteurs 17 pour modifier une composition des gaz d'échappement. On pourrait prévoir de commander tout élément d'exécution de fonctions élémentaires du moteur permettant d'agir sur la composition des gaz d'échappement.

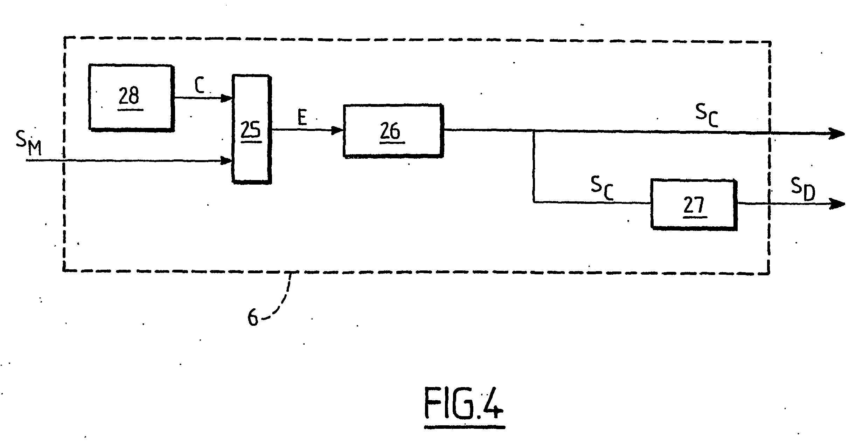

Sur la figure 4, décrite en conservant les références aux éléments semblables à ceux de la figure 1, l'unité de commande 6 comprend un comparateur 25 à deux entrées et une sortie, ledit comparateur 25 recevant en entrée d'une part une valeur de référence ou consigne C provenant d'un module de référence 28, et d'autre part le signal de sortie S_{M} de la sonde 23. Le comparateur 25 fourni en sortie l'écart E défini comme la différence entre la valeur de référence C et le signal de sortie S_{M}. L'écart E est envoyé en entrée d'un module de commande 26 apte à élaborer un signal de commande S_{c}.

Le signal de commande S_{C} est transmis soit directement vers un élément d'exécution d'une fonction élémentaire du moteur, par exemple les injecteurs 17, soit par l'intermédiaire de moyens de commande différents. Dans ce deuxième cas, le signal de commande S_{c} peut être un signal de correction d'un signal de commande principal élaboré par ailleurs par un module de commande principal, non représenté, par exemple pour augmenter ou diminuer un temps d'ouverture des injecteurs 17 déterminé par le module de commande principal, afin de respectivement augmenter ou diminuer une richesse d'un mélange de combustion.

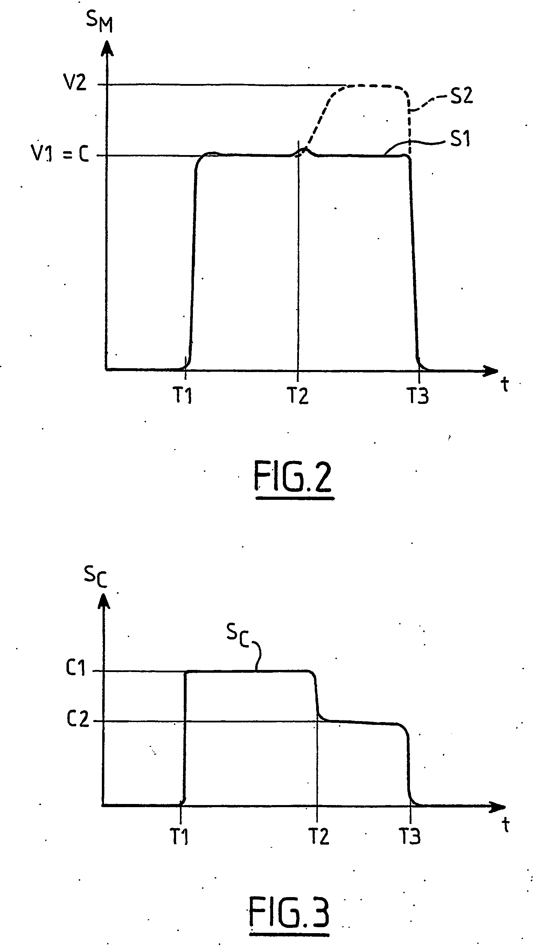

L'unité de commande 6 comprend également un module de détection 27 recevant en entrée le signal de commande S_{C} élaboré par le module de commande 26, le module de détection étant apte à détecter à partir du signal de commande S_{C} la fin d'une phase de purge, comme cela sera mieux décrit par la suite à l'étude des figures 2 et 3. Le module de détection 27 fourni en sortie un signal de détection S_{D} qui est transmis vers des moyens de commandes de l'unité de commande 6 non représentés, apte à provoquer un arrêt de la phase de purge.

Sur la figure 2, décrite en conservant les références utilisées pour la description des figures 1 et 4, un signal de sortie S_{M} signaux de sortie de la sonde 23 pendant une phase de purge sont reportés sur un graphique présentant en abscisse le temps et en ordonnée le niveau d'un signal de sortie S_{M}.

Un premier signal S₁ représenté en trait plein correspond au signal de sortie de la sonde lambda 23 obtenu dans le cas d'une élaboration d'un signal de commande S_{C} par régulation à partir du premier signal S₁. Un second signal S₂, confondu avec le premier signal S₁ sauf entre un instant intermédiaire T2 et un instant final T3 d'une phase de purge, est représenté en pointillés. Le second signal S₂ correspond à un signal de sortie qui serait obtenu à partir d'une sonde lambda disposée en aval du convertisseur catalytique 14, pendant une phase de purge, mais sans modification d'une composition des gaz d'échappement en amont du convertisseur catalytique commandée uniquement à partir du signal de sortie de ladite sonde lambda.

Le second signal S₂ est nul avant un instant initial T1 de début de phase de purge et après un instant final de fin de purge T3. Immédiatement après l'instant initial T1, le second signal S₂ rejoint une première valeur de plateau V1, et conserve cette première valeur V1 sensiblement jusqu'à un instant intermédiaire T2. Immédiatement après l'instant intermédiaire T2, correspondant à la fin de la réduction des oxydes d'azotes piégés dans le piège à oxydes d'azote, le second signal S₂ rejoint une seconde valeur de plateau V2 supérieure à la première valeur V1. La seconde valeur est conservée jusqu'à l'instant final T3, à partir duquel le second signal S₂ rejoint la valeur nulle.

Le premier signal S₁ atteint la première valeur V1 après l'instant initial T1, et conserve sensiblement cette valeur jusqu'à l'instant final T3, à partir duquel il rejoint la valeur nulle. Le premier signal S₁ s'écarte légèrement de la première valeur V1 autour de l'instant intermédiaire. La première valeur V1correspond à la consigne C.

Au début d'une phase de purge, entre l'instant initial T1 de début de purge et l'instant intermédiaire T2, la sonde 23 produit un signal de mesure S_{M} représentatif de la teneur en oxygène des gaz d'échappement en aval du convertisseur catalytique 14. On a constaté que ce signal de mesure est proportionnel à la richesse carburant/air des gaz d'échappement. En fonction de l'écart E entre le signal de mesure S_{M}, le module de commande 26 détermine un signal de commande S_{C} appliqué aux injecteurs 17 et permettant de faire varier la richesse carburant/air du mélange de combustion et par la suite la composition des gaz d'échappement. La boucle de régulation formée par le module de commande 26 a pour effet d'obtenir une composition des gaz d'échappement maintenant un signal de mesure S_{M} de la sonde 23 sensiblement égal à la consigne C.

Entre l'instant initial T1 et l'instant intermédiaire T2, les oxydes d'azote adsorbés dans les sites actifs du convertisseur catalytique 14 sont éliminés par des réactions d'oxydoréduction.

A partir de l'instant intermédiaire T2, les oxydes d'azote adsorbés par les éléments catalytiques du convertisseur catalytique 14 sont sensiblement complètement éliminés. Dès lors, si on ne change pas un signal de commande il s'opère une modification de la composition des gaz d'échappement en aval du convertisseur catalytique 14 car des réducteurs présents dans les gaz d'échappement ne sont plus oxydés. Il se produit notamment une augmentation d'une teneur de gaz d'échappement en hydrogène (H2), qui est un réducteur des oxydes d'azotes auquel la sonde à oxygène est sensible. Cette modification de composition des gaz d'échappement provoquerait le passage du signal de sortie S_{M} de la première valeur V1 à la seconde valeur V2 comme illustré par le second signal S₂. La seconde valeur V2 est en fait une valeur de saturation de la sonde à oxygène.

Du fait de la régulation, le signal de sortie S_{M} reste sensiblement constant, comme illustré par le signal S1, mais la composition des gaz d'échappement est modifiée.

Sur la figure 3, décrite en conservant les références utilisées pour les figures 1, 2 et 4, un signal de commande S_{C} élaboré par le module de commande 26 et correspondant au premier signal de mesure S₁ de la figure 2 est représenté schématiquement sur un graphique présentant un axe des abscisses sur lequel est reporté le temps et un axe des ordonnées sur lequel est reporté la valeur du signal de commande S_{C}.

Le signal de commande S_{C}, représenté en trait plein est nul avant l'instant initial T1 et après l'instant final T3. Le signal de commande S_{C} atteint une première valeur de commande C1 après l'instant initial T1, conserve cette valeur jusqu'à l'instant intermédiaire T2, puis atteint une seconde valeur de commande C2 qu'il conserve sensiblement jusqu'à l'instant final T3.

Le saut du signal de commande S_{C} après l'instant intermédiaire T2 correspond à la fin de la réduction des oxydes d'azote et la modification de la composition des gaz d'échappement en aval du convertisseur catalytique 14 qui en découle. De part la régulation, le signal de commande S_{C} est modifié de sorte que le signal de mesure S₁ reste sensiblement égal à valeur de consigne C (fig. 2) et ne présente pas de saut vers la seconde valeur V2. Par contre, le signal de commande présente lui un saut correspondant.

Le saut du signal de commande S_{C} entre le premier plateau et le second plateau permet de détecter la fin de la purge des oxydes d'azote et le passage à une étape finale d'une phase de purge. En effet, on pourra détecter le franchissement d'un seuil de la dérivée première du signal de commande S_{C} à l'instant T2, une annulation de la dérivée seconde du signal de commande S_{C} sensiblement à l'instant T2, ou encore détecter le franchissement d'un seuil par la différence entre la valeur du signal instantané et la valeur moyenne glissante du signal de commande S_{C}.

En cas de détection d'un tel saut, le module de détection 27 élabore un signal de détection indiquant qu'une phase de purge doit être arrêtée.

On notera que l'intervalle de temps entre le temps intermédiaire et le temps final a été exagéré par rapport à l'intervalle de temps entre le temps initial et le temps intermédiaire, pour des raisons de clarté. L'intervalle de temps entre le temps intermédiaire et le temps final est court, une purge étant arrêtée dès la détection de la fin de purge.

Par ailleurs, une sonde à oxygène, notamment une sonde lambda étant sensible à sa température de fonctionnement, on pourra prévoir des moyens pour maintenir une température de la sonde lambda constante. On pourra prévoir un circuit muni d'un détecteur de température de la sonde lambda et associé à une alimentation de la sonde lambda pour commander une tension d'alimentation du chauffage de la sonde lambda permettant d'en adapter la température. On pourra en variante compenser des mesures fournies par la sonde lambda en fonction de la température de la sonde lambda.

Grâce à l'invention, on peut commander un moteur à combustion interne pour la mise en oeuvre de phases de purge de moyens de purification des gaz d'échappement en utilisant une analyse de la composition des gaz d'échappement uniquement en aval des moyens de purification. Une unique sonde peut être employée, ce qui réduit la complexité d'un dispositif de commande. En outre, on peut utiliser pour l'analyse de composition une sonde à oxygène du type lambda, plus robuste et moins sensible à la pression que les sondes à oxygène du type proportionnelles. Les moyens de purification et la sonde lambda aval associée pourront être disposés sur la ligne d'échappement à proximité de la sortie des chambres de combustion du moteur. Le temps de réponse rapide des sondes lambda, notamment en comparaison des sondes à oxygène proportionnelles, permettra encore une amélioration d'une régulation de la composition des gaz d'échappement. Par ailleurs, on peut détecter la fin d'une phase de purge par analyse d'un signal de commande élaborés à partir du signal de sortie de la sonde.

## Revendications

1. Procédé de commande d'un moteur à combustion interne (2) pour la régénération de moyens de purification des gaz d'échappement (14) disposés sur une ligne d'échappement (4) du moteur (2), dans lequel, pendant une phase de régénération des moyens de purification, on analyse une composition des gaz d'échappement uniquement en aval des moyens de purification (14) à l'aide d'une sonde à oxygène, **caractérisé en ce qu'**on élabore à partir de ladite analyse un signal de commande du moteur (2) pour modifier une composition des gaz d'échappement en amont des moyens de purification (14) de façon à maintenir un signal de sortie de la sonde à oxygène (S_{M}) à une valeur de référence (C).

2. Procédé selon la revendication 1, **caractérisé par le fait que** l'on analyse la composition des gaz d'échappement à l'aide d'une sonde à oxygène (23) du type tout ou rien située en aval des moyens de purification (14).

3. Procédé selon la revendication 2, **caractérisé par le fait que** l'on contrôle une température de fonctionnement de la sonde (23).

4. Procédé selon l'une quelconque des revendications précédentes, **caractérisé par le fait que** l'on compare le signal de sortie de la sonde (S_{M}) à la valeur de référence (C), et on détermine un signal de commande (S_{C}) pour diminuer un écart (E) entre le signal de sortie de la sonde (S_{M}) et la valeur de référence (C).

5. Procédé selon l'une quelconque des revendications précédentes, **caractérisé par le fait que** l'on détecte une étape de fin d'une phase de régénération à partir d'un signal de commande (S_{C}).

6. Dispositif de commande pour la régénération de moyens de purification (14) des gaz d'échappement disposés sur une ligne d'échappement (4) d'un moteur à combustion interne (2), comprenant un module de commande (26) apte à modifier une injection de carburant, et une sonde à oxygène (23) disposée sur la ligne d'échappement directement en aval des moyens de purifications (14), **caractérisé par le fait que**, pendant un phase de régénération des moyens de purification (14), le module de commande d'injection est apte à provoquer une modification de la composition des gaz d'échappement uniquement en fonction d'un signal de sortie de ladite sonde à oxygène (23) de façon à maintenir un signal de sortie de la sonde à oxygène (S_{M}) à une valeur de référence (C).

7. Dispositif selon la revendication 6, **caractérisé par le fait que** la sonde à oxygène (23) est du type tout-ou-rien ou proportionnelle.

8. Dispositif selon l'une quelconque des revendications 6 ou 7, **caractérisé par le fait qu'**il comprend des moyens de contrôle de la température de fonctionnement de la sonde (23).

9. Dispositif selon l'une quelconque des revendications 6 à 8, **caractérisé par le fait qu'**il comprend un module de détection (27) apte à détecter la fin d'une phase de régénération en fonction d'un signal de commande produit par le module de commande (26).

10. Dispositif selon l'une quelconque des revendications 6 à 9, **caractérisé par le fait que** les moyens de purifications comprennent un piège à oxydes d'azote

## Claims

1. Method of controlling an internal combustion engine (2) for regenerating exhaust gas purifying means (14) arranged on an exhaust line (4) of the engine (2), in which, during a phase of regenerating the purifying means, an exhaust gas composition is analysed exclusively downstream of the purifying means (14) using an oxygen probe, **characterized in that**, based on the said analysis, an engine (2) control signal is produced for changing an exhaust gas composition upstream of the purifying means (14) in order to maintain an oxygen probe output signal (S_{M}) at a reference value (C).

2. Method according to Claim 1, **characterized in that** the exhaust gas composition is analysed using an oxygen probe (23) of the on/off type located downstream of the purifying means (14).

3. Method according to Claim 2, **characterized in that** an operating temperature of the probe (23) is monitored.

4. Method according to any one of the preceding claims, **characterized in that** the probe output signal (S_{M}) is compared with the reference signal (C), and a control signal (S_{C}) is determined in order to decrease a difference (E) between the probe output signal (S_{M}) and the reference value (C).

5. Method according to any one of the preceding claims, **characterized in that** a regeneration phase end step is detected on the basis of a control signal (S_{C}).

6. Control device for regenerating exhaust gas purifying means (14) arranged on an exhaust line (4) of an internal combustion engine (2), comprising a control module (26) suitable for changing a fuel injection, and an oxygen probe (23) arranged on the exhaust line directly downstream of the purifying means (14), **characterized in that**, during a phase of regenerating the purifying means (14), the injection control module is capable of causing a change in the composition of the exhaust gases exclusively according to an output signal of the said oxygen probe (23) in order to maintain an oxygen probe output signal (S_{M}) at a reference value (C).

7. Device according to Claim 6, **characterized in that** the oxygen probe (23) is of the on/off or proportional type.

8. Device according to either of Claims 6 and 7, **characterized in that** it comprises means for monitoring the operating temperature of the probe (23).

9. Device according to any one of Claims 6 to 8, **characterized in that** it comprises a detection module (27) capable of detecting the end of a regeneration phase according to a control signal produced by the control module (26).

10. Device according to any one of Claims 6 to 9, **characterized in that** the purifying means comprise a nitrogen oxide trap.

## Patentansprüche

1. Verfahren zur Steuerung eines Verbrennungsmotors (2) zur Regeneration von Abgasreinigungsmitteln (14), die auf einer Auspuffleitung (4) des Motors (2) angeordnet sind, bei dem während einer Regenerationsphase der Reinigungsmittel eine Zusammensetzung der Abgase nur hinter den Reinigungsmitteln (14) mit Hilfe einer Sauerstoffsonde analysiert wird, **dadurch gekennzeichnet, dass** ausgehend von der Analyse ein Steuersignal des Motors (2) erarbeitet wird, um eine Zusammensetzung der Abgase vor den Reinigungsmitteln (14) so zu verändern, dass ein Ausgangssignal (S_{M}) der Sauerstoffsonde auf einem Bezugswert (C) gehalten wird.

2. Verfahren nach Anspruch 1, **dadurch gekennzeichnet, dass** die Zusammensetzung der Abgase mit Hilfe einer Sauerstoffsonde (23) vom Typ Ein-Aus analysiert wird, die sich hinter den Reinigungsmitteln (14) befindet.

3. Verfahren nach Anspruch 2, **dadurch gekennzeichnet, dass** eine Betriebstemperatur der Sonde (23) überwacht wird.

4. Verfahren nach einem der vorhergehenden Ansprüche, **dadurch gekennzeichnet, dass** das Ausgangssignal (S_{M}) der Sonde mit dem Bezugswert (C) verglichen wird, und dass ein Steuersignal (S_{C}) bestimmt wird, um eine Abweichung (E) zwischen dem Ausgangssignal (S_{M}) der Sonde und dem Bezugswert (C) zu verringern.

5. Verfahren nach einem der vorhergehenden Ansprüche, **dadurch gekennzeichnet, dass** ausgehend von einem Steuersignal (S_{C}) ein Endschritt einer Regenerationsphase erfasst wird.

6. Steuervorrichtung zur Regeneration von Abgasreinigungsmitteln (14), die auf einer Auspuffleitung (4) eines Verbrennungsmotors (2) angeordnet sind, mit einem Steuermodul (26), der in der Lage ist, eine Kraftstoffeinspritzung zu verändern, und mit einer Sauerstoffsonde (23), die auf der Auspuffleitung direkt hinter den Reinigungsmitteln (14) angeordnet ist, **dadurch gekennzeichnet, dass** der Einspritzsteuermodul (26) während einer Regenerationsphase der Reinigungsmittel (14) in der Lage ist, eine Veränderung der Zusammensetzung der Abgase nur in Abhängigkeit von einem Ausgangssignal der Sauerstoffsonde (23) derart zu verändern, dass ein Ausgangssignal (S_{M}) der Sauerstoffsonde auf einem Bezugswert (C) gehalten wird.

7. Vorrichtung nach Anspruch 6, **dadurch gekennzeichnet, dass** die Sauerstoffsonde (23) vom Typ Ein-Aus oder proportional ist.

8. Vorrichtung nach einem der Ansprüche 6 oder 7, **dadurch gekennzeichnet, dass** sie Mittel zur Überwachung der Betriebstemperatur der Sonde (23) aufweist.

9. Vorrichtung nach einem der Ansprüche 6 bis 8, **dadurch gekennzeichnet, dass** sie einen Erfassungsmodul (27) aufweist, der in der Lage ist, das Ende einer Regenerationsphase in Abhängigkeit von einem vom Steuermodul (26) erzeugten Steuersignal zu erfassen.

10. Vorrichtung nach einem der Ansprüche 6 bis 9, **dadurch gekennzeichnet, dass** die Reinigungsmittel eine Stickoxidfalle enthalten.
